# EUROPÄISCHE PATENTANMELDUNG

(11) **EP 2 216 624 A2**
(43) Veröffentlichungstag der Anmeldung: **11.08.2010**
(21) Anmeldenummer: 10151868.6
(22) Anmeldetag: 28.01.2010
(51) Int. Cl.: G01C 21/36

(54) **Verfahren zum Betrieb einer Navigationseinrichtung**

(30) Priorität: 10.02.2009 DE 102009008315; 21.04.2009 DE 102009018055
(71) Anmelder: Navigon AG, 20251 Hamburg (DE)
(72) Erfinder: Gaupp, Moritz, 82229, Seefeld (DE)
(74) Vertreter: von den Steinen, Axel

(57) **Zusammenfassung**

Die Erfindung betrifft ein Verfahren zum Betrieb einer Navigationseinrichtung zur Ermittlung eines Streckenverlaufes für ein Fortbewegungsmittel, insbesondere ein Navigationsgerät für ein Kraftfahrzeug, mit Positionssignalempfangsmittel, insbesondere für GPS-Signale, mit Positionsermittlungseinrichtung zur Bestimmung einer Position aus den empfangenen Positionssignalen, mit Eingabemittel zur Eingabe von Bedienbefehlen und mit einer in einem Speicher gespeicherten digitalen Karte, wobei die Kartendaten topographische Geländedaten enthalten, und mit einer Prozessoreinrichtung zur Berechnung einer topographischen Geländedarstellung unter Berücksichtigung des aktuellen Standpunkts (06) und mit einer Anzeigeeinrichtung (05), an der die topographische Geländedarstellung angezeigt werden kann, mit folgenden Verfahrensschritten:
a) Berechnung einer topographischen Geländedarstellung in einem Nahbereich (09) um den aktuellen Standpunkt (06) als Darstellung eines Polygonmodells (12),
b) Berechnung der topographischen Geländedarstellung in einem Fernbereich (10) um den aktuellen Standpunkt (06) als Darstellung eines Projektionsmodells (13, 14), bei der ein Geländeausschnitt auf zumindest eine Projektionsfläche (02, 03) eines Projektionskörpers (01) projiziert wird,
c) Anzeige der topographischen Geländedarstellung an der Anzeigeeinrichtung als Kombination aus der Darstellung des Polygonmodells (12) im Nahbereich (09) und der Darstellung des Projektionsmodells (13, 14) im Fernbereich (10).

## Beschreibung

Die Erfindung betrifft ein Verfahren zum Betrieb einer Navigationseinrichtung nach der Lehre des Anspruchs 1.

Gattungsgemäße Navigationseinrichtungen, beispielsweise mobile oder fest eingebaute Navigationsgeräte für Kraftfahrzeuge, dienen dazu, den Benutzer beim Auffinden einer Route zwischen einem Startpunkt und einem Zielpunkt zu unterstützen. Durch Empfang und Auswertung von Positionssignalen, insbesondere GPS-Signalen, kann die Navigationseinrichtung dabei den aktuellen Standpunkt bestimmen und unter Berücksichtigung eines zuvor berechneten Streckenverlaufs dem Benutzer

Navigationsanweisungen ausgeben. Die Ausgabe der Navigationsanweisungen erfolgt dabei üblicherweise sowohl akustisch als auch optisch durch Anzeige an einer Anzeigeeinrichtung.

Um die Orientierung des Benutzers zu verbessern, werden bei neueren Navigationseinrichtungen an der Anzeigeeinrichtung topographische Geländedarstellungen angezeigt. Dabei handelt es sich um quasi dreidimensionale Geländedarstellungen, aus denen das Geländeprofil ersichtlich ist. Dies bedeutet mit anderen Worten, dass der Benutzer bei der Betrachtung der topographischen Geländedarstellungen einen Eindruck der Geländetopographie erhält. Insbesondere können also Geländeerhebungen, wie beispielsweise Berge und Täler, optisch für den Benutzer dargestellt werden.

Die Berechnung der topographischen Geländedarstellung beruht auf der Auswertung von topographischen Geländedaten, die in der auf einem Speicher gespeicherten digitalen Karte enthalten sind. Der Speicher mit der digitalen Karte kann dabei Bestandteil der Navigationseinrichtung sein. Alternativ dazu ist es auch denkbar, dass der Speicher außerhalb der Navigationseinrichtung, beispielsweise auf einem Server, vorgesehen ist und die entsprechenden Daten über eine Datenleitung an die Navigationseinrichtung übertragen werden.

Um die topographische Geländedarstellung ermitteln zu können, werden bei den bekannten Navigationseinrichtungen dreidimensionale Polygonmodelle aus den digitalen Kartendaten errechnet, wobei diese dreidimensionalen Polygonmodelle die Gestalt der Geländetopographie repräsentieren. Die Flächen des dreidimensionalen Polygonmodells werden dann noch mit geeigneten Texturen zur Darstellung der entsprechenden Geländeform, beispielsweise zur Darstellung eines Waldes oder von Feldern, gerendert. Nachteilig an den bekannten Verfahren zum Betrieb von Navigationseinrichtungen, bei denen eine topographische Geländedarstellung berechnet und angezeigt wird, ist es, dass mit zunehmender in der Geländedarstellung anzuzeigender Sichtweite der erforderliche Rechenaufwand exponentiell ansteigt. Denn mit zunehmender Sichtweite müssen sehr große Datenbestände zur Beschreibung der topographischen Geländedaten ausgewertet und in ein dreidimensionales Polygonmodell umgerechnet werden. Der damit erhebliche Rechenaufwand führt zu geringeren Ablaufgeschwindigkeiten bzw. entsprechend reduzierten Frameraten. Um die Ablaufgeschwindigkeiten in einem akzeptablen Bereich zu halten, ist außerdem eine entsprechend leistungsfähige Hardware notwendig.

Ausgehend von diesem Stand der Technik ist es deshalb Aufgabe der vorliegenden Erfindung, ein neues Verfahren zum Betrieb einer Navigationseinrichtung, bei der eine topographische Geländedarstellung berechnet und angezeigt werden kann, vorzuschlagen, wobei das neue Verfahren die Anforderungen im Hinblick auf die notwendige Hardware für die Berechnung der topographischen Geländedarstellung reduzieren soll und zugleich erhöhte Ablaufgeschwindigkeiten ermöglicht. Diese Aufgabe wird durch ein Verfahren nach der Lehre des Anspruchs 1 gelöst.

Vorteilhafte Ausführungsformen der Erfindung sind Gegenstand der Unteransprüche.

Grundgedanke des erfindungsgemäßen Verfahrens ist es, dass die topographische Geländedarstellung in einen Nahbereich und in einen Fernbereich aufgeteilt wird. Der Nahbereich wird dabei jeweils durch den aktuellen Standpunkt definiert und beschreibt das Gelände in einem bestimmten Sektor an bzw. um den aktuellen Standpunkt. Der Fernbereich betrifft die gesamte übrige Geländedarstellung außerhalb des Nahbereichs. Bei der Anzeige der topographischen Geländedarstellung ist es für die Orientierung des Benutzers von größter Bedeutung, dass der Nahbereich möglichst exakt und in Übereinstimmung mit den tatsächlichen Gegebenheiten dargestellt wird, da der Nahbereich der topographischen Geländedarstellung den Teil des Geländes repräsentiert, der unmittelbar an den aktuellen Standpunkt des Benutzers heranreicht. Die Teile des topographischen Geländes, die außerhalb des Nahbereichs und damit im Fernbereich liegen, sind dagegen für die Orientierung des Benutzers nicht von so großer Bedeutung, da die entsprechenden Geländeteile ohnehin relativ weit entfernt liegen.

Um den für die Berechnung und Anzeige der topographischen Geländedarstellung notwendigen Rechenaufwand in der erwünschten Weise zu reduzieren, wird erfindungsgemäß vorgeschlagen, dass die Berechnung der topographischen Geländedarstellung im Nahbereich und im Fernbereich in unterschiedlicher Weise erfolgt. Für den Nahbereich wird die topographische Geländedarstellung, wie bisher schon üblich, als dreidimensionales Polygonmodell berechnet, so dass die unmittelbar an den aktuellen Standort angrenzende Geländetopographie relativ sehr exakt dargestellt wird. Für den Fernbereich wird die Geländedarstellung nicht als dreidimensionales Polygonmodell berechnet, sondern als Projektionsmodell. Bei diesem Projektionsmodell wird die Topographie des Geländes auf eine Projektionsfläche eines Projektionskörpers projiziert. Dieses projizierte Bild wird dann zur Darstellung des Geländes im Fernbereich jeweils angezeigt.

Die Anzeige der topographischen Geländedarstellung an der Anzeigeeinrichtung für den Benutzer erfolgt dann als Kombination aus der Darstellung des Polygonmodells im Nahbereich und der Darstellung des Projektionsmodells im Fernbereich. Dies bedeutet mit anderen Worten, dass für die Berechnung des topographischen Geländes im Fernbereich die aufwendige Berechnung des 3D-Polygonmodells entfallen kann und stattdessen durch eine entsprechend einfachere Berechnung eines Projektionsmodells ersetzt wird. Dadurch kann erfindungsgemäß der erforderliche Rechenaufwand zur Berechnung der topographischen Geländedarstellung erheblich verringert werden.

Auf welche Weise das Projektionsmodell für die Darstellung des topographischen Geländes im Fernbereich berechnet wird, ist grundsätzlich beliebig. Gemäß einer bevorzugten Ausführungsform wird dazu ein virtueller Projektionskörper verwendet, der die Form eines Würfels aufweist. Auf die Innenflächen dieses Projektionswürfels werden dann die entsprechenden Geländeausschnitte projiziert. Die dabei entstehenden Projektionsbilder entsprechen dabei im Wesentlichen digital berechneten Bildern, wie sie bei Aufnahme des entsprechenden Geländes mit einer Kamera bei der entsprechenden Blickrichtung gemacht werden würden. Nimmt man dann einen Standpunkt innerhalb des Projektionswürfels ein, so hat man einen virtuellen Blick in die entsprechende Landschaft, die dem Blick an dem entsprechenden Standort entspricht.

In der erfindungsgemäßen Grundform des Verfahrens werden das Polygonmodell und das Projektionsmodell für den Nah- bzw. für den Fernbereich jeweils für den aktuellen Standpunkt berechnet und in einem Speicher abgelegt. Bei Änderung des aktuellen Standpunkts, beispielsweise weil das Fahrzeug sich innerhalb einer bestimmten Zeit mit einer bestimmten Geschwindigkeit voranbewegt hat, muss die topographische Geländedarstellung jeweils neu berechnet und angezeigt werden. Durch Einsatz des erfindungsgemäßen Ansatzes zur Darstellung des topographischen Geländes im Fernbereich als Projektionsdarstellung kann der notwendige Rechenaufwand bei Neuberechnung der topographischen Geländedarstellung wegen eines Ortswechsels wiederum erheblich reduziert werden. Denn die Darstellung des Geländes im Fernbereich ändert sich bei einer relativ kleinen Ortsveränderung im Nahbereich selbstverständlich nur sehr wenig. Dies bedeutet mit anderen Worten, dass die Projektionsdarstellung des Geländes bei kleineren Ortsänderungen des aktuellen Standorts nur sehr geringe Abweichungen aufweist. Gemäß einer bevorzugten Verfahrensvariante ist es deshalb vorgesehen, dass bei einer Änderung des aktuellen Standpunkts nur das Polygonmodell für die topographische Darstellung im Nahbereich neu berechnet wird. Für die Anzeige des topographischen Geländes im Fernbereich wird dagegen das zuvor für einen anderen Standort berechnete Projektionsmodell wieder verwendet.

Die Darstellungsfehler bei erneuter Verwendung eines bereits für einen anderen Standpunkt berechneten Projektionsmodells werden umso größer, je weiter sich der aktuelle Standpunkt vom Standpunkt entfernt, der der Berechnung des Projektionsmodells zugrunde lag. Um die Darstellungsfehler bei Wiederverwendung eines bereits vorher berechneten Projektionsmodells auf ein akzeptables Maß zu begrenzen, wird vorgeschlagen, dass zumindest zwei Objekte aus dem Nahbereich, beispielsweise ein bestimmtes Gebäude oder ein Baum, bei der Berechnung des Projektionsmodells auf die Projektionsfläche projiziert werden. Ändert sich nun der aktuelle Standpunkt, so wird bei der Anzeige des Projektionsmodells eine Relativverschiebung des Projektionskörpers vorgenommen, bis die Differenz zwischen der Darstellung der beiden Objekte im Polygonmodell und der Darstellung der beiden Objekte im Projektionsmodell unterhalb einer vorgegebenen Toleranzschwelle liegt. Auf diese Weise kann erreicht werden, dass durch Justierung der Lage des Projektionsmodells relativ zum Polygonmodell ein minimaler Darstellungsfehler erreicht wird.

Überschreitet die Differenz zwischen den beiden Darstellungen der beiden Objekte im Polygonmodell einerseits und im Projektionsmodell andererseits eine vorgegebene Toleranzschwelle, so wird daraus abgeleitet, dass die bisher verwendete Projektionsdarstellung nicht mehr geeignet ist, so dass ein neues Projektionsmodell auf Grundlage des neuen aktuellen Standpunkts berechnet werden muss.

Verschiedene Aspekte des erfindungsgemäßen Verfahrens werden anhand der Zeichnungen nachfolgend beispielhaft erläutert.

### Es zeigen:

- Fig. 1: ein schematisch dargestelltes Projektionsmodell in perspektivischer Ansicht;
- Fig. 2: ein in einer Navigationseinrichtung darzustellendes topographisches Gelände in perspektivischer Ansicht;
- Fig. 3: die an einer Anzeigeeinrichtung einer Navigationseinrichtung angezeigte topographische Geländedarstellung des Geländes gemäß Fig. 2;
- Fig. 4: die relative Anordnung zwischen einem Polygonmodell und einem Projektionsmodell für die topographische Geländedarstellung bei der Vorwärtsbewegung eines Fahrzeugs;
- Fig. 5: die relative Anordnung zwischen einem Polygonmodell und einem Projektionsmodell für die topographische Geländedarstellung bei einer kombinierten Geradeaus- und Abbiegebewegung;
- Fig. 6: ein Modell zur relativen Positionierung des Polygonmodells und des Projektionsmodells bei einer topographischen Geländedarstellung;
- Fig. 7: das Modell gemäß Fig. 6 bei Überschreiten einer vorgegebenen Toleranzschwelle.

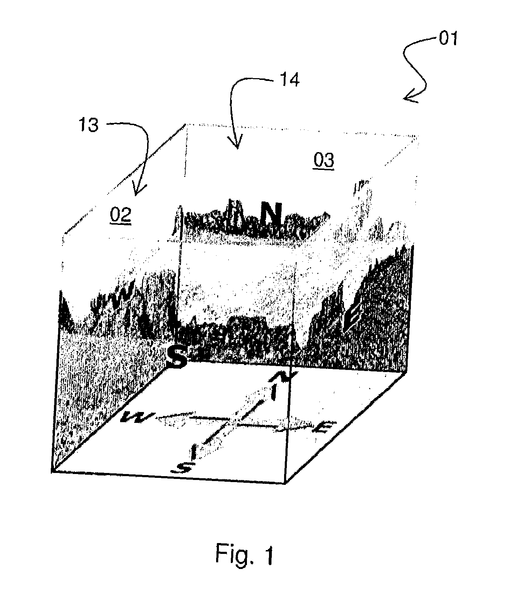

Fig. 1 stellt schematisch ein Projektionsmodell für die Darstellung eines topographischen Geländes dar. Als Projektionskörper 01 dient dabei ein Projektionswürfel, wobei auf die beiden Innenflächen 02 und 03 des Projektionskörpers die Geländetopographie in westlicher bzw. nördlicher Richtung aufprojiziert ist. Dies bedeutet mit anderen Worten, dass auf den Innenflächen 02 und 03 zwei Geländedarstellungen aufprojiziert sind, wie sie sich bei Sicht vom aktuellen Standpunkt aus in nördlicher bzw. westlicher Richtung ergeben.

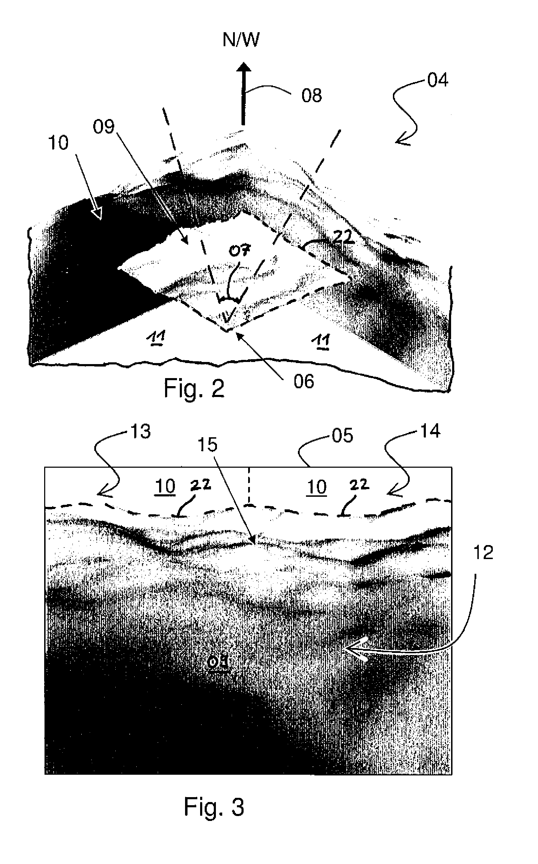

Fig. 2 zeigt in perspektivischer Darstellung ein Gelände 04, dessen Topographie an der Anzeigeeinrichtung 05 (siehe Fig. 3) einer Navigationseinrichtung dargestellt werden soll. Die Darstellung der Topographie soll dabei ausgehend von einem aktuellen Standpunkt 06 mit einem Blickwinkel 07 erfolgen. Im dargestellten Beispiel entspricht die Blickrichtung 08 also genau einer nordwestlichen Richtung. Für die Berechnung der topographischen Geländedarstellung an der Anzeigeeinrichtung 05 wird das Gelände in einen Nahbereich 09 und einen Fernbereich 10 aufgeteilt. Der Nahbereich 09 wird dabei so angeordnet, dass der aktuelle Standpunkt 06 an der Ecke eines rechteckförmigen Gebiets liegt. Für dieses rechteckförmige Gebiet wird anschließend ein dreidimensionales Polygonmodell zur Darstellung der Geländetopographie berechnet. Der Fernbereich 10 definiert sich durch drei Viertelsektoren um den Mittelpunkt des Nahbereichs 09. Für diesen Fernbereich 10 wird ein Projektionsmodell zur Darstellung des topographischen Geländes 04 berechnet. Dieses Projektionsmodell entspricht dabei gerade der Projektion auf den Projektionskörper 01 gemäß Fig. 1. Für den fehlenden Viertelsektor 11, der außerhalb des Nahbereichs 09 und außerhalb des Fernbereichs 10 liegt, wird keine topographische Geländedarstellung berechnet, da er im Rücken der Blickrichtung 08 liegt.

Fig. 3 zeigt die Darstellung des topographischen Geländes 04 an einer Anzeigeeinrichtung 05 einer Navigationseinrichtung bei Einnahme des Standpunkts 06 mit Blickrichtung 08. Der Vordergrund der Darstellung, die dem Nahbereich 09 entspricht, beruht dabei auf einer Darstellung eines dreidimensionalen Polygonmodells 12. Die Darstellung des Geländes 04 im Fernbereich 10 entspricht den Projektionen 13 und 14 an den Innenflächen 02 und 03 des Projektionskörpers 01. Die Grenze 22 in der Darstellung an der Anzeigeeinrichtung 05 ergibt sich dabei aus der rechteckförmigen Grenze zwischen Nahbereich 09 und Fernbereich 10 in dem durch den Blickwinkel 07 definierten Sektor.

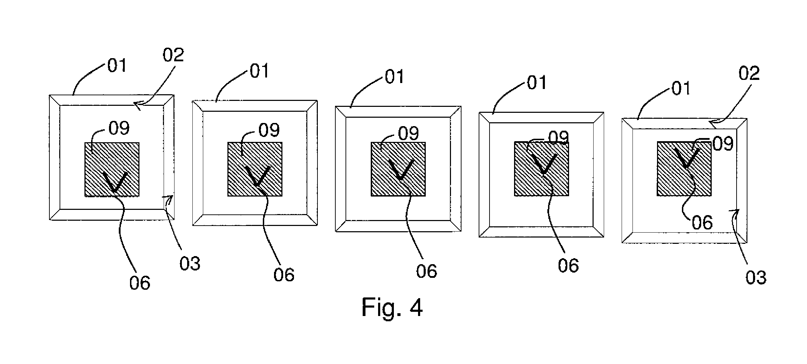

Fig. 4 stellt das Modell zur Darstellung des topographischen Geländes 04 bei einer Geradeausfahrt dar. Ausgehend vom aktuellen Standpunkt 06 bewegt sich ein Fahrzeug vorwärts, was einer Verschiebung des aktuellen Standpunkts 06 relativ zum Nahbereich 09 bzw. zum Fernbereich 10 entspricht. Um möglichst wenig Darstellungsfehler in der Darstellung des topographischen Geländes 04 an der Anzeigeeinrichtung 05 zu haben, wird der Projektionskörper 01 bei der Berechnung des topographischen Geländes relativ zum Standpunkt 06 verschoben, um die Darstellung des Projektionsmodells in der richtigen Blickperspektive zu halten.

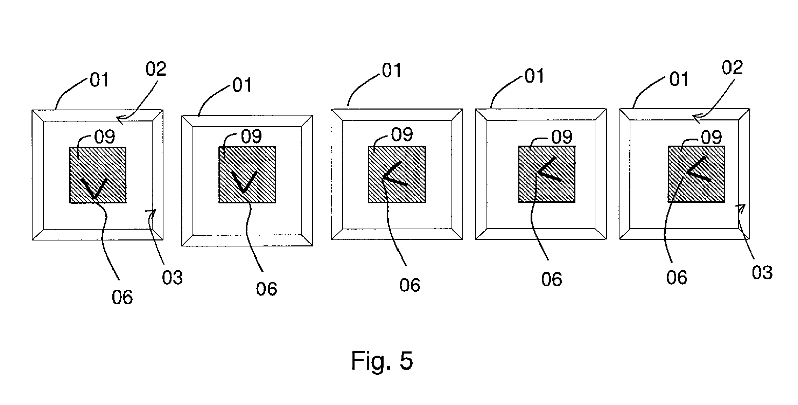

Fig. 5 erläutert das Darstellungsmodell bei Veränderung der Blickrichtung 08, beispielsweise beim Fahren einer Rechtskurve. Fuhr der Fahrer beispielsweise zunächst in westliche Richtung, so dass bei der topographischen Geländedarstellung allein die Projektion 13 angezeigt wurde, so wird nach Fahren einer Rechtskurve die Projektion 14 an der Innenfläche 03 beim Aufbau des Bildinhalts an der Anzeigeeinrichtung 05 verwendet.

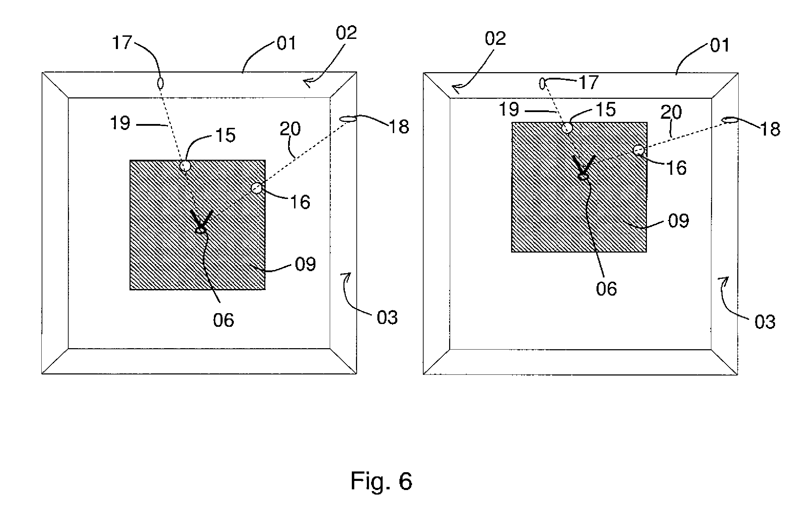

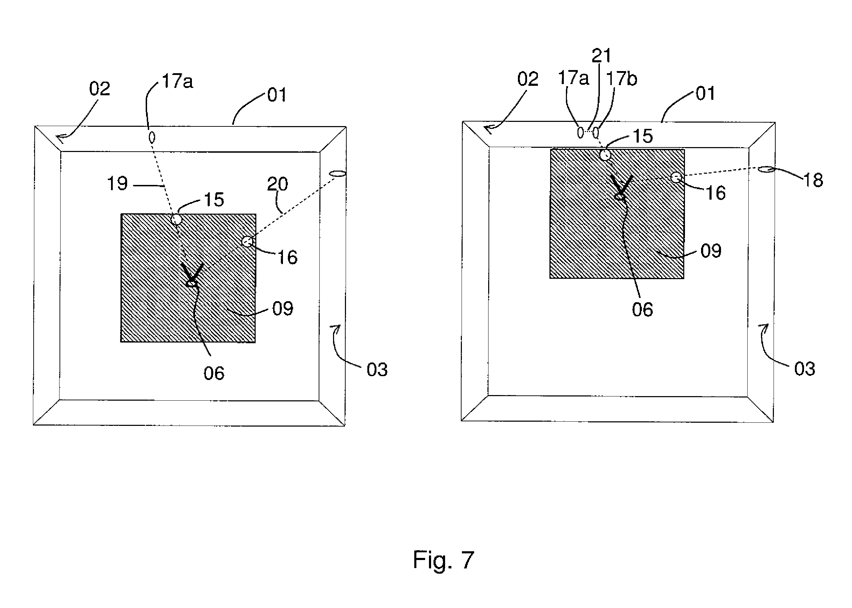

Anhand von Fig. 6 und Fig. 7 wird nachfolgend die relative Positionierung des Projektionskörpers 01 mit den darin enthaltenen Projektionen 13 und 14 relativ zum jeweils berechneten 3D-Polygonmodell 12 erläutet. Auf der linken Seite von Fig. 6 wird dabei die Ausgangsposition dargestellt. Nach der Berechnung der Projektionen 13 und 14 und dem 3D-Polygonmodell 12 werden zusätzlich noch die Projektionen zweier Objekte 15 und 16 aus dem Nahbereich 09 in die beiden Innenflächen 02 und 03 berechnet. Diese beiden Projektionspunkte 17 und 18 werden zwischengespeichert. Auf der linken Seite von Fig. 6 ist nun die Situation nach der Änderung des aktuellen Standpunkts 06 gezeigt. Für die Ermittlung der Relativanordnung zwischen dem Projektionsmodell des Projektionskörpers 01 und dem Polygonmodell 12 werden erneut die Projektionspunkte 17 und 18 berechnet, die sich gemäß dem neuen aktuellen Standpunkt für die Objekte 15 und 16 ergeben. Das Polygonmodell 12 wird nun relativ zum Projektionskörper 01 so angeordnet, dass die Blickachsen 19 und 20 durch die Objekte 15 und 16 auf die Projektionspunkte 17 und 18 fallen.

In Fig. 7 ist die Situation dargestellt, dass sich der aktuelle Standpunkt 06 so weit verschoben hat, dass die Darstellung des topographischen Geländes unter Verwendung der Projektionen 13 und 14 nicht mehr sinnvoll möglich ist. Wird nämlich die Blickachse 20 so gelegt, dass sie zugleich durch das Objekt 16 und den Projektionspunkt 18 fällt, so ist die Differenz 21 zwischen dem ursprünglich errechneten Projektionspunkt 17a für die Projektion des Objekts 15 auf die Innenfläche 02 und dem neuen Projektionspunkt 17b für die Projektion des Objekts 15 auf die Innenfläche 02 größer als eine vorgegebene Toleranzschwelle, die das Maß der zulässigen Abweichung definiert. In diesem Fall wird dann eine neue Projektion für den Projektionskörper 01 ausgehend von dem neuen aktuellen Standpunkt berechnet und für die Darstellung zugrunde gelegt.

## Patentansprüche

1. Verfahren zum Betrieb einer Navigationseinrichtung zur Ermittlung eines Streckenverlaufes für ein Fortbewegungsmittel, insbesondere ein Navigationsgerät für ein Kraftfahrzeug,
mit Positionssignalempfangsmittel, insbesondere für GPS-Signale, mit Positionsermittlungseinrichtung zur Bestimmung einer Position aus den empfangenen Positionssignalen, mit Eingabemittel zur Eingabe von Bedienbefehlen,
und mit einer in einem Speicher gespeicherten digitalen Karte, wobei die Kartendaten topographische Geländedaten enthalten,
und mit einer Prozessoreinrichtung zur Berechnung einer topographischen Geländedarstellung unter Berücksichtigung des aktuellen Standpunkts (06),
und mit einer Anzeigeeinrichtung (05), an der die topographische Geländedarstellung angezeigt werden kann,
mit folgenden Verfahrensschritten:
a) Berechnung einer topographischen Geländedarstellung in einem Nahbereich (09) um den aktuellen Standpunkt (06) als Darstellung eines Polygonmodells (12),
b) Berechnung der topographischen Geländedarstellung in einem Fernbereich (10) um den aktuellen Standpunkt (06) als Darstellung eines Projektionsmodells (13, 14), bei der ein Geländeausschnitt auf zumindest eine Projektionsfläche (02, 03) eines Projektionskörpers (01) projiziert wird,
c) Anzeige der topographischen Geländedarstellung an der Anzeigeeinrichtung als Kombination aus der Darstellung des Polygonmodells (12) im Nahbereich (09) und der Darstellung des Projektionsmodells (13, 14) im Fernbereich (10).

2. Verfahren nach Anspruch 1,
**dadurch gekennzeichnet,**
**dass** der Projektionskörper (01) in der Art eines Würfels ausgebildet ist, wobei für die Geländedarstellung im Fernbereich ein Geländeausschnitt auf zumindest zwei Innenflächen (02, 03) des Würfels projiziert wird.

3. Verfahren nach Anspruch 1 oder 2,
**dadurch gekennzeichnet,**
**dass** bei einer Änderung des aktuellen Standpunkts (06) die Geländedarstellung im Nahbereich (09) als Darstellung eines neuen Polygonmodells (12) berechnet und angezeigt wird und die Geländedarstellung im Fernbereich (10) als Darstellung einer Relativverschiebung des vorhandenen Projektionsmodells (13, 14) angezeigt wird.

4. Verfahren nach einem der Ansprüche 1 bis 3,
**dadurch gekennzeichnet,**
**dass** für zumindest zwei Objekte (15, 16) aus dem Nahbereich (09) eine Projektion (17, 18) auf Projektionsflächen (02, 03) des Projektionskörpers (01) berechnet wird, wobei die Relativverschiebung des vorhandenen Projektionsmodells (13, 14) so vorgenommen wird, dass die Darstellungsdifferenz (21) zwischen der Darstellung der beiden Objekte (15, 16) im Polygonmodell (12) und der Darstellung der beiden Objekte (15, 16) im Projektionsmodell (13, 14) unterhalb einer vorgegebenen Toleranzschwelle liegt.

5. Verfahren nach Anspruch 4,
**dadurch gekennzeichnet,**
**dass** bei Überschreiten der Darstellungsdifferenz (21) über die vorgegebene Toleranzschwelle für zumindest ein Objekt (15) ein neues Projektionsmodell auf Grundlage des neuen Standpunkts berechnet wird.
